# EUROPÄISCHE PATENTSCHRIFT

(11) **EP 0 872 408 B1**
(45) Veröffentlichungstag und Bekanntmachung des Hinweises auf die Patenterteilung: **07.05.2003**
(21) Anmeldenummer: 98105571.8
(22) Anmeldetag: 27.03.1998
(51) Int. Cl.: B62D 25/14

(54) **Anordnung in einem Cockpitbereich eines Kraftfahrzeuges**
Arrangement in a dashboard area of a motor vehicle
Agencement pour le tableau de bord d'un véhicule automobile

(30) Priorität: 16.04.1997 DE 19715873
(43) Veröffentlichungstag der Anmeldung: 21.10.1998
(73) Patentinhaber: Micro Compact Car smart GmbH, 71272 Renningen (DE)
(72) Erfinder: Bayer, Helmut, 72218 Wildberg (DE); Henseler, Wolfgang, 72076 Tübingen (DE); Schick, Ulrich, 72202 Nagold-Vollmaringen (DE)
(74) Vertreter: Weiss, Klaus

(56) Entgegenhaltungen:
- DE-A- 1 625 271
- DE-A- 4 337 467

## Beschreibung

Die Erfindung betrifft eine Anordnung in einem Cockpitbereich eines Kraftfahrzeuges mit einem Cockpitquerträger, der an Halteabschnitten im Bereich seiner gegenüberliegenden Stirnenden unter Zwischenlagerung von wenigstens einem Ausgleichskeil an zwei seitlichen Tragsäulen einer Karosserietragstruktur des Kraftfahrzeugs festlegbar ist, und dem auf einer Fahrerseite eine Lenkanlage zugeordnet ist.

Ein solcher Cockpitbereich ist aus der gattungsgemäßen DE 43 37 467 A1 bekannt. Bei diesem Cockpitbereich ist auf einem sich über die Fahrzeugbreite erstreckenden Cockpitquerträger ein gesamtes Cockpit für einen Fahrzeuginnenraum eines Kraftfahrzeugs, vorzugsweise eines Personenkraftwagens, vormontierbar. Zur Montage des auf dem Cockpitquerträger vormontierten Cockpits in der Fahrgastzelle wird das Cockpit zwischen zwei als Tragsäulen der Karosserietragstruktur dienende A-Säulen gebracht und anschließend der Cockpitquerträger mit im Bereich seiner gegenüberliegenden Stirnenden vorgesehenen Halteabschnitten über Befestigungsschrauben an Befestigungspunkten der Tragsäulen festgelegt. Um Toleranzen zwischen der Breite des Cockpits und des Cockpitquerträgers sowie dem Abstand zwischen den gegenüberliegenden Tragsäulen auszugleichen, ist den beiden gegenüberliegenden Halteabschnitten des Cockpitquerträgers jeweils ein Ausgleichskeil zugeordnet, der jeweils in einer oberen Montageposition mittels eines Sicherungselementes gehalten ist. Durch die Entfernung jedes Sicherungselementes rutschen die beiden Ausgleichskeile automatisch aufgrund ihres Eigengewichtes so weit nach unten, bis sie den jeweils zwischen der zugeordneten Tragsäule und dem Halteabschnitt des Cockpitquerträgers verbleibenden Spalt ausgefüllt haben und sich zwischen diesen verkeilen. Nun werden die Befestigungsschrauben festgezogen, so daß eine sichere Verbindung zwischen dem Cockpitquerträger und den Tragsäulen geschaffen wird. Die Entfernung der Sicherungselemente bei gleichzeitiger Ausrichtung des Cockpitquerträgers zu den Tragsäulen erfordert jedoch einen gewissen zusätzlichen Montageaufwand. Sollten die Befestigungsschrauben nicht vollständig angezogen sein, so können sich zudem die Ausgleichskeile zwischen den Tragsäulen und dem Cockpitquerträger insbesondere bei Vibrationen des Fahrzeugs wieder lösen, wodurch keine satte Verbindung zwischen Cockpitquerträger und Tragsäulen mehr gegeben ist.

Aufgabe der Erfindung ist es, einen Cockpitbereich der eingangs genannten Art zu schaffen, der bei reduziertem Montageaufwand eine sichere Verbindung zwischen dem Cockpitquerträger und den Tragsäulen gewährleistet.

Diese Aufgabe wird dadurch gelöst, daß der Ausgleichskeil mittels einer Lageranordnung an dem zugeordneten Halteabschnitt des Cockpitquerträgers gelagert ist, mittels derer der Ausgleichskeil zwangsgeführt aus einer Montageposition in eine Toleranzen zwischen dem Cockpitquerträger und den Tragsäulen ausgleichende Funktionsposition überführbar ist, und die einen Anschlag zur Fixierung des Ausgleichskeiles in seiner Montageposition aufweist, und daß dem Ausgleichskeil insbesondere formschlüssig wirksame Fixiermittel zur Positionssicherung des Ausgleichskeiles in seiner Funktionsposition zugeordnet sind. Durch die erfindungsgemäße Lageranordnung einschließlich des Anschlages ist es möglich, den Ausgleichskeil einerseits in seiner Montageposition fixiert zu halten und dennoch andererseits ohne das zusätzliche Lösen eines Sicherungselementes- wie dies beim Stand der Technik der Fall ist - direkt aus dieser Montageposition eine Überführung des Ausgleichskeiles in die Funktionsposition zu erzielen. Die Zwangsführung des Ausgleichskeiles zwischen der Montageposition und der Funktionsposition kann dabei entweder durch eine rotatorische oder durch eine translatorische Bewegung erfolgen. Die Fixiermittel gewährleisten, daß der Ausgleichskeil auch dann sicher in seiner Funktionsposition gehalten wird, wenn keine fest angezogene Verbindung zwischen den Tragsäulen und dem Cockpitquerträger besteht. Beim Stand der Technik sind keine Fixiermittel zur Positionssicherung des Ausgleichskeiles in seiner Funktionsposition vorgesehen. Die Fixierung des Ausgleichskeiles in seiner Funktionsposition erfolgt beim Stand der Technik vielmehr ausschließlich durch die kraftschlüssige Anlage an der Tragsäule und am Halteabschnitt des Cockpitquerträgers aufgrund der festgezogenen Schraubverbindungen. Besonders vorteilhaft sind die Fixiermittel formschlüssig wirksam. Der Formschluß ist in seiner Richtung dabei auf die Bewegungsrichtung des Ausgleichskeiles relativ zu dem Halteabschnitt bezogen. Durch die formschlüssige Wirkung wird somit anders als beim Stand der Technik, bei dem die Fixierung des Ausgleichskeiles in seiner Funktionsposition ausschließlich durch die kraftschlüssige Anlage an der Tragsäule und am Cockpitquerträger erfolgt, auch unabhängig von einem gegebenenfalls nicht vorhandenen Kraftschluß mittels der Befestigungsschrauben eine sichere Positionierung des Ausgleichskeiles in seiner Funktionsposition gewährleistet. Die formschlüssige Wirkung der Fixiermittel ist insbesondere bei translatorisch beweglichem Ausgleichskeil vorteilhaft. Bei rotatorisch beweglichem Ausgleichskeil ist es auch möglich, eine Fixierung des Ausgleichskeiles in seiner Funktionsposition durch ein selbsthemmendes Gewinde der Lageranordnung koaxial zur Rotationsachse vorzusehen.

In Ausgestaltung der Erfindung, die auch unabhängig von der zuvor beschriebenen Lösung die erfindungsgemäße Aufgabe löst, ist der Cockpitquerträger im Bereich der Fahrerseite direkt an die zugeordnete Tragsäule angeschlagen, und zwischen dem gegenüberliegenden Halteabschnitt und der korrespondierenden Tragsäule ist ein Ausgleichskeil vorgesehen. Dadurch wird lediglich ein einzelner Ausgleichskeil benötigt, wodurch der Montageaufwand erheblich reduziert wird. Durch das direkte Anschlagen des Cockpitquerträgers an die der Lenkanlage und damit auch der Lenksäule benachbarte Tragsäule wird gegenüber dem Stand der Technik eine erhebliche Verkürzung der Toleranzkette zwischen der Tragsäule und der Lenkanlage erzielt. Somit wird eine enge Toleranzeinhaltung der Position der Lenkanlage relativ zur Karosserietragstruktur erreicht. Durch das Vorsehen lediglich eines einzelnen Ausgleichskeiles wird auch die Anzahl der Teile zur Montage des Cockpits an der Karosserietragstruktur reduziert. Der Ausgleichskeil kann entweder gemäß der zuvor beschriebenen erfindungsgemäßen Lösung oder auch analog der im Stand der Technik beschriebenen Lösung gestaltet sein.

In weiterer Ausgestaltung der Erfindung sind dem Ausgleichskeil und dem korrespondierenden Halteabschnitt des Cockpitquerträgers Führungsflächen zur rotatorischen oder translatorischen Zwangsführung des Ausgleichskeiles zwischen seiner Montageposition und seiner Funktionsposition zugeordnet. Dadurch ist eine besonders einfache Überführung des Ausgleichskeiles in die Funktionsposition oder die Montageposition möglich.

In weiterer Ausgestaltung der Erfindung ist dem Ausgleichskeil im Bereich von Befestigungspunkten zwischen der Tragsäule und dem Cockpitquerträger wenigstens ein entsprechend seinem Ausgleichsweg verlaufender Langlochabschnitt zugeordnet, dessen Breite geringer ist als ein Gewindedurchmesser von wenigstens einer zugeordneten Befestigungsschraube der Befestigungspunkte, und die wenigstens eine Befestigungsschraube ist selbstfurchend gestaltet. Da der Langlochabschnitt eine geringere Breite aufweist als der Gewindedurchmesser der Befestigungsschraube, schneidet sich die Befestigungsschraube beim Einschrauben in die Ränder des wenigstens einen Langlochabschnittes hinein, wodurch in Richtung des Ausgleichsweges und damit in Bewegungsrichtung des Ausgleichskeiles ein Formschluß erzielt wird, der den Ausgleichskeil in seiner Funktionsposition hält.

In weiterer Ausgestaltung der Erfindung sind bei translatorisch zwangsgeführtem Ausgleichskeil an dem Ausgleichskeil und an dem zugehörigen Halteabschnitt des Cockpitquerträgers als Anschlag dienende Einhängeelemente für die Montageposition des Ausgleichskeiles vorgesehen, und der Ausgleichskeil ist relativ zu dem Halteabschnitt aus seiner Montageposition nach oben - auf eine Fahrzeughochrichtung bezogen - verschiebbar. Dies ist eine besonders einfache und funktionssichere Ausgestaltung, da der Ausgleichskeil lediglich an dem zugehörigen Halteabschnitt des Cockpitquerträgers eingehängt werden muß. Durch das Nachobenschieben des Ausgleichskeiles gerät dieser automatisch außer Eingriff mit den korrespondierenden Einhängeelementen am Halteabschnitt des Cockpitquerträgers, so daß er ohne zusätzliche Handgriffe direkt aus seiner Montageposition in die Funktionsposition überführbar ist. Als Einhängeelemente sind insbesondere am Ausgleichskeil Einhängehaken und am Halteabschnitt des Cockpitquerträgers zugehörige Einhängenasen oder -zapfen vorgesehen.

In weiterer Ausgestaltung der Erfindung sind bei translatorisch zwangsgeführtem Ausgleichskeil den korrespondierenden schrägen Anlageflächen des Ausgleichskeiles und des Halteabschnittes an gegenüberliegenden Randbereichen Seitenführungen zugeordnet. Dies ist eine besonders einfache und funktionssichere Lösung, zumal die Seitenführungen einstückig am Ausgleichskeil oder an den Halteabschnitt des Cockpitquerträgers angeformt sein können.

Weitere Vorteile und Merkmale der Erfindung ergeben sich aus den Unteransprüchen sowie aus der nachfolgenden Beschreibung eines bevorzugten Ausführungsbeispiel der Erfindung, das anhand der Zeichnungen dargestellt ist.
- Fig. 1: zeigt schematisch in perspektivischer Ansicht eine Ausführungsform eines erfindungsgemäßen Cockpitbereiches, dessen Cockpitquerträger zwischen zwei als Tragsäulen dienenden A-Säulen einer Karosserietragstruktur eines Personenkraftwagens angeordnet ist,
- Fig. 2: in perspektivischer, vergrößerter Darstellung einen seitlichen Halteabschnitt des Cockpitquerträgers nach Fig. 1, dessen schiefer Anlageebene ein Ausgleichskeil zugeordnet ist,
- Fig. 3: den Halteabschnitt mit Ausgleichskeil nach Fig. 2 in einer anderen perspektivischen Darstellung und in einer anderen Position des Ausgleichskeiles, und
- Fig. 4: in perspektivischer Darstellung den Halteabschnitt des Cockpitquerträgers, bei dem der Ausgleichskeil sich in einer Montageposition befindet.

Ein Personenkraftwagen weist eine selbsttragende Karosserietragstruktur auf, die in einem Frontbereich einer Fahrgastzelle mit einer - in Fahrtrichtung gesehen - linken Tragsäule 1 und einer rechten Tragsäule 2 versehen ist. Die Tragsäulen 1 und 2 bilden A-Säulen der Karosserietragstruktur und begrenzen eine Windschutzscheibe 3 der Fahrgastzelle zu beiden Seiten. Unterhalb der Windschutzscheibe 3 ist ein Cockpitbereich 5 vorgesehen, wobei die einzelnen Cockpitbauteile auf einem Cockpitquerträger 4 festgelegt sind. Der Cockpitquerträger 4 erstreckt sich horizontal über die Breite der Fahrgastzelle und ist an seinen gegenüberliegenden Stirnenden in nachfolgend näher beschriebener Weise an der Tragsäule 1 einerseits und an der Tragsäule 2 andererseits festgelegt. Zur Festlegung des Cockpitquerträgers 4 an den beiden Tragsäulen 1, 2 weist der Cockpitquerträger 4 einerseits einen linken Halteabschnitt 7 und andererseits einen rechten Halteabschnitt 8 auf, die jeweils mit Hilfe von Befestigungsschrauben an den zugeordneten Tragsäulen 1, 2 festgelegt sind. Der Cockpitquerträger 4 ist beim dargestellten Ausführungsbeispiel als einstückiges Bauteil aus einem Leichtmetallwerkstoff, insbesondere aus Magnesium hergestellt, wobei die Halteabschnitte 7 und 8 einstückig an dem Cockpitquerträger 4 angeformt sind.

Der Cockpitquerträger 4 trägt auch den cockpitseitigen Teil einer Lenkanlage 6, insbesondere eine Lenksäule sowie ein Lenkrad. Der cockpitseitige Teil der Lenkanlage 6 ist auf einer Fahrerseite der Fahrgastzelle angeordnet und beim dargestellten Ausführungsbeispiel zu der in Fahrtrichtung linken Tragsäule 1 benachbart. Der Cockpitquerträger 4 ist mit seinem Halteabschnitt 7 an der der Lenkanlage 6 benachbarten Tragsäule 1 direkt angeschlagen, so daß über den steifen Cockpitquerträger 4 eine direkte, lediglich gering toleranzbehaftete Zuordnung der Lenkanlage 6 zur Karosserietragstruktur erreicht wird. Da sich bezüglich des Abstandes der beiden Tragsäulen 1, 2 zueinander und der sich über die Breite der Fahrgastzelle erstreckenden Länge des Cockpitquerträgers 4 Toleranzen ergeben, ist der in Fahrtrichtung rechte Halteabschnitt 8 des Cockpitquerträgers 4 unter Zwischenlagerung eines nachfolgend näher beschriebenen Ausgleichskeiles 9 an der gegenüberliegenden Tragsäule 2 festgelegt. Je nach der Lage der Anlageflächen des Halteabschnittes 8, des Ausgleichskeiles 9 und der Tragsäule 2 im geometrischen Raum können dadurch Toleranzen in Fahrzeugquerrichtung, in Fahrzeughochrichtung und in Fahrzeuglängsrichtung ausgeglichen werden. Dazu ist der Halteabschnitt 8 - vorteilhaft analog der Anbindung des gegenüberliegenden Halteabschnittes 7 an die gegenüberliegende Tragsäule 1 - entweder abgewinkelt oder in fluchtender Verlängerung des Cockpitquerträgers 4 ausgerichtet.

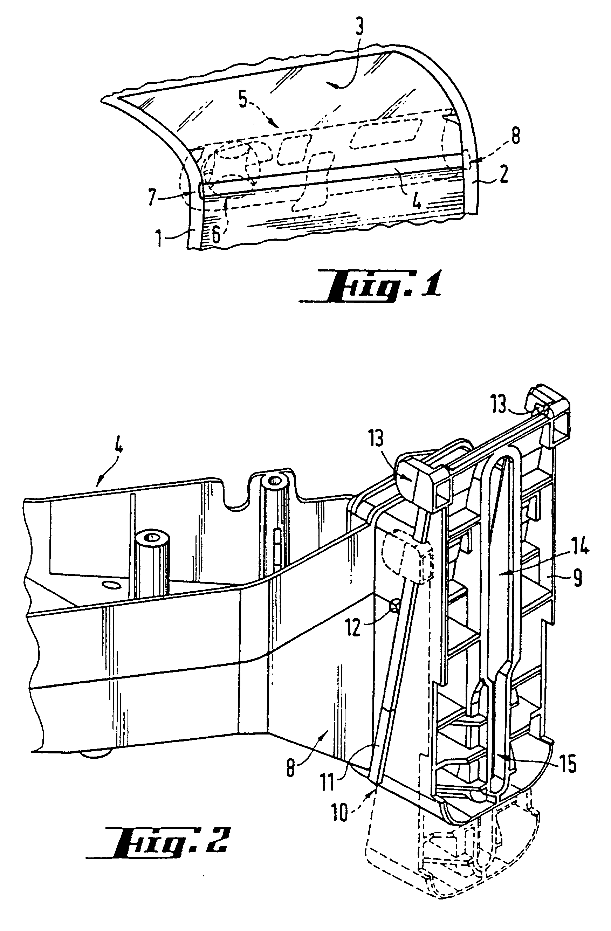

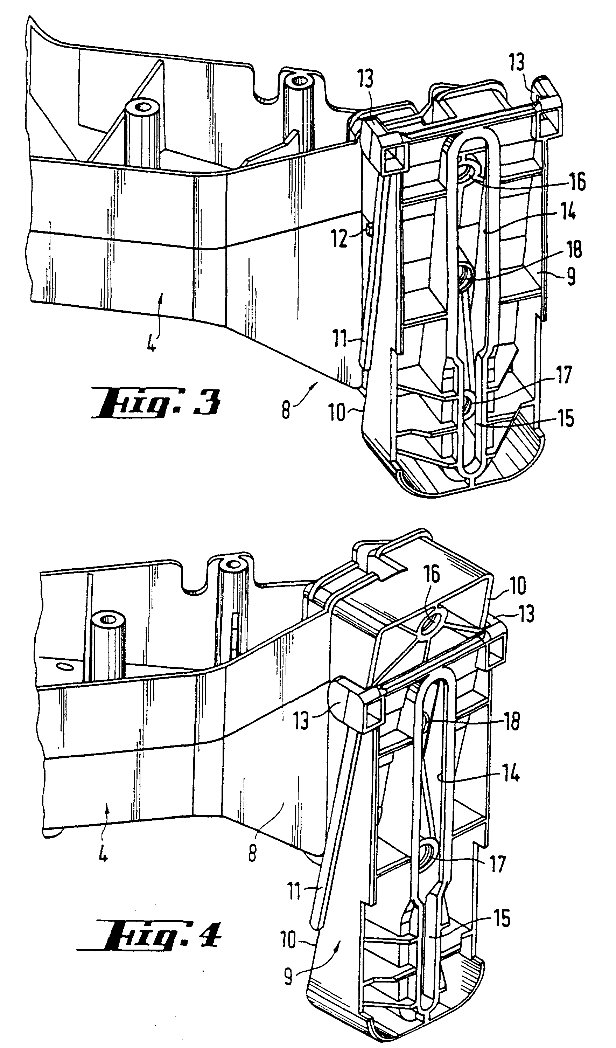

Der Halteabschnitt 8 weist gemäß den Fig. 2 bis 4 eine als schiefe Ebene abgeschrägte Anlagefläche 10 auf, die sich von unten aus nach oben hin schräg nach außen erstreckt. Der Ausgleichskeil 9, der ebenfalls als einstückiges Leichtmetallbauteil, insbesondere als Magnesiumbauteil, gestaltet ist, weist eine korrespondierende Anlagefläche 10 auf, die derart auf die Anlagefläche 10 des Halteabschnittes 8 angepaßt ist, daß die korrespondierenden Anlageflächen 10 flächig aneinander entlanggleiten können. In Fic. 3 ist eine Nullage der Toleranzpositionen dargestellt, aus der heraus der Ausgleichskeil 9 gemäß Fig. 2 seine obere und seine untere Toleranzendlage einnehmen kann. In Fig. 4 ist die Einhänge- und damit Montageposition des Ausgleichskeiles 9 dargestellt.

Die Keilform des Ausgleichskeiles 9 ist so gestaltet, daß die translatorische Verschiebung des Ausgleichskeiles 9 längs der Anlagefläche 10 eine parallel zur Anschraubfläche der Tragsäule 2 verlaufende, gegenüberliegende Stirnfläche des Ausgleichskeiles 9 ergibt. Die Anlagefläche 10 des Ausgleichskeiles 9 ist an ihren gegenüberliegenden Seiten mit rippenartig angeformten Seitenführungen 11 versehen, die eine translatorische Zwangsverschiebung des Ausgleichskeiles 9 relativ zum Halteabschnitt 8 bewirken. Über die Höhe des Halteabschnittes 8 verteilt sind drei in Abstand übereinander angeordnete Befestigungsdome 16, 17, 18 vorgesehen, die in einer gemeisamen, vertikalen Flucht zueinander angeordnet sind. Die Befestigungsdome 16, 17, 18 sind mit Aufnahmebohrungen zum Aufnehmen von selbstfurchenden Befestigungsschrauben versehen, die von der Tragsäule 2 aus zur Festlegung des Halteabschnittes 8 an der Tragsäule 2 in diese Aufnahmen eingeschraubt werden. Der Ausgleichskeil 9 ist auf Höhe der Befestigungsdome 16, 17, 18 mit einem als Langloch dienenden Längsschlitz 14, 15 versehen, der in einen oberen Langlochabschnitt 14 und einen unteren Langlochabschnitt 15 unterteilt ist. Der obere Langlochabschnitt 14 weist eine größere Breite auf als der koaxial abgestufte Langlochabschnitt 15. Dabei ist die Breite des oberen Langlochabschnittes 14 größer als der äußere Gewindedurchmesser der Befestigungsschrauben, die Breite des unteren Langlochabschnittes 15 ist hingegen geringer als der Außendurchmesser der Gewinde dieser Befestigungsschrauben. Die Länge des unteren Langlochabschnittes 15 entspricht dabei wenigstens dem maximalen Verschiebeweg des Ausgleichskeiles 9 relativ zu dem Halteabschnitt 8, wie er in Fig. 2 anhand der gestrichelt dargestellten unteren Toleranzposition und der in durchgezogenen Linien dargestellten oberen Toleranzposition gezeigt ist. Sobald daher die zugehörige Befestigungsschraube in die Aufnahme des unteren Befestigungsdomes 17 des Halteabschnittes 8 eingeschraubt wird, schneidet sich die Befestigungsschraube gleichzeitig in den Rand des unteren Langlochabschnittes 15 ein, wodurch eine formschlüssige Sicherung des Ausgleichskeiles 9 in seiner jeweiligen Position relativ zu dem Halteabschnitt 8 erzielt wird. Da der Ausgleichskeil 9 durch die gemeinsam mit den Anlageflächen 10 als Führungsflächen dienenden Seitenführungen 11 auf den gegenüberliegenden Seiten der Anlagefläche 10 zudem linear gleitbeweglich relativ zu dem Halteabschnitt 8 gehalten ist, kann durch die Vorrichtungskräfte der Befestigungsschraube auch kein Wegkippen des Ausgleichskeiles 9 erreicht werden, so daß der Ausgleichskeil 9 sicher in seiner Position verbleibt.

Um den Ausgleichskeil 9 verliersicher an dem Halteabschnitt 8 des Cockpitquerträgers 4 zu halten, sind am Halteabschnitt 8 auf zwei gegenüberliegenden Seiten zwei jeweils seitlich nach außen abragende, nasenförmige Einhängezapfen 12 vorgesehen, denen am Ausgleichskeil 9 zwei zugehörige und einstückig am Ausgleichskeil 9 angeformte Einhängehaken 13 zugeordnet sind. In seiner Montageposition, in der der Ausgleichskeil 9 lediglich am Cockpitquerträger 4 gehalten ist, ohne daß dieser jedoch schon mit der Tragsäule 2 verbunden ist, wird der Ausgleichskeil 9 durch sein Eigengewicht und die formschlüssige Sicherung der Einhängehaken 13 sicher positioniert auf den Einhängezapfen 12 gehalten. Da die Einhängehaken 13 nach unten offen sind, kann der Ausgleichskeil 9 jedoch ohne zusätzliche Handgriffe durch ein einfaches Verschieben nach oben aus dieser Montageposition gelöst werden. Der Ausgleichskeil 9 wird zur Montage des Cockpitquerträgers 4 an der Tragsäule 2 somit nach dem Festlegen des Cockpitquerträgers 4 an der gegenüberliegenden Tragsäule 1 in einfacher Weise so weit nach oben geschoben, bis der verbleibende Spalt zwischen der Tragsäule 2 und dem Halteabschnitt 8 des Cockpitquerträgers 4 ausgefüllt ist. In dieser Position werden zunächst zwei Befestigungsschrauben in die beiden oberen Befestigungsdome 16 und 18 eingeschraubt. Durch das zusätzliche Einschrauben der unteren Befestigungsschraube in den Befestigungsdom 17 wird gleichzeitig aufgrund der Gewindefurchung in die Ränder des unteren Langlochabschnittes 15 die Positionssicherung des Ausgleichskeiles 9 relativ zum Halteabschnitt 8 erreicht.

## Patentansprüche

1. Anordnung in einem Cockpitbereich eines Kraftfahrzeuges, wobei ein Cockpitquerträger (4) vorgesehen ist, der an Halteabschnitten im Bereich seiner gegenüberliegenden Stirnenden (7,8) unter Zwischenlagerung von wenigstens einem Ausgleichskeil (9) an zwei seitlichen Tragsäulen (1,2) einer Karosserietragstruktur des Kraftfahrzeugs festlegbar ist, und dem auf einer Fahrerseite eine Lenkanlage zugeordnet ist,
**dadurch gekennzeichnet,**
**daß** der Ausgleichskeil (9) mittels einer Lageranordnung (10, 11, 12, 13) an dem zugeordneten Halteabschnitt (8) des Cockpitquerträgers (4) gelagert ist, mittels derer der Ausgleichskeil (9) zwangsgeführt aus einer Montageposition in eine Toleranzen zwischen dem Cockpitquerträger (4) und den Tragsäulen (1, 2) ausgleichende Funktionsposition überführbar ist, und die einen Anschlag (12, 13) zur Fixierung des Ausgleichskeiles (9) in seiner Montageposition aufweist, und daß dem Ausgleichskeil (9) formschlüssig wirksame Fixiermittel (15) zur Positionssicherung des Ausgleichskeiles (9) in seiner Funktionsposition zugeordnet sind.

2. Anordnung nach Anspruch 1,
**dadurch gekennzeichnet,**
**daß** der Cockpitquerträger (4) im Bereich der Fahrerseite direkt an die zugeordnete Tragsäule (1) angeschlagen ist, und daß zwischen dem gegenüberliegenden Halteabschnitt (8) und der korrespondierenden Tragsäule (2) der Ausgleichskeil (9) vorgesehen ist.

3. Anordnung nach Anspruch 1 oder 2,
**dadurch gekennzeichnet,**
**daß** dem Ausgleichskeil (9) und dem korrespondierenden Halteabschnitt (8) des Cockpitquerträgers (4) Führungsflächen (10, 11) zur rotatorischen oder translatorischen Zwangsführung des Ausgleichskeiles (9) zwischen seiner Montageposition und seiner Funktionsposition zugeordnet sind.

4. Anordnung nach einem der vorhergehenden Ansprüche,
**dadurch gekennzeichnet,**
**daß** dem Ausgleichskeil (9) im Bereich von Befestigungspunkten (16, 17, 18) zwischen der Tragsäule (2) und dem Cockpitquerträger (4) wenigstens ein entsprechend seinem Ausgleichsweg verlaufender Langlochabschnitt (15) zugeordnet ist, dessen Breite geringer ist als ein Gewindedurchmesser von wenigstens einer zugeordneten Befestigungsschraube der Befestigungspunkte (16, 17, 18), und daß die wenigstens eine Befestigungsschraube selbstfurchend gestaltet ist.

5. Anordnung nach einem der vorhergehenden Ansprüche,
**dadurch gekennzeichnet,**
**daß** bei translatorisch zwangsgeführtem Ausgleichskeil (9) an dem Ausgleichskeil (9) und an dem zugehörigen Halteabschnitt (8) des Cockpitquerträgers (4) als Anschlag dienende Einhängeelemente (12, 13) für die Montageposition des Ausgleichskeiles (9) vorgesehen sind, und daß der Ausgleichskeil (9) relativ zu dem Halteabschnitt aus seiner Montageposition nach oben - auf eine Fahrzeughochrichtung bezogen - verschiebbar ist.

6. Anordnung nach Anspruch 3,
**dadurch gekennzeichnet,**
**daß** bei translatorisch zwangsgeführtem Ausgleichskeil (9) den korrespondierenden schrägen Anlageflächen (10) des Ausgleichskeiles (9) und des Halteabschnittes (8) an gegenüberliegenden Randbereichen Seitenführungen (11) zugeordnet sind.

## Claims

1. Arrangement in a dashboard region of a motor vehicle, in which a dashboard cross member (4) is provided, which can be fixed to two lateral support columns (1, 2) by retaining portions in the region of its oppositely lying front ends (7, 8) with at least one compensating wedge (9) mounted in between and having a steering system on a driver's side,
**characterised in that**
the compensating wedge (9) is mounted on the associated retaining portion (8) of the dashboard cross member (4) by means of a bearing arrangement (10, 11, 12, 13), by means of which the compensating wedge (9) is forcibly guided as it is changed from a mounted position into an operative position compensating for tolerances between the dashboard cross member (4) and the support columns (1, 2) and having a stop (12, 13) for fixing the compensating wedge (9) in its mounted position, and fixing means (15) acting in a form-fitting manner are provided for positioning the compensating wedge (9) in its operative position.

2. Arrangement as claimed in claim 1,
**characterised in that**
on the driver's side, the dashboard cross member (4) is brought into abutment directly against the associated support column (1) and the compensating wedge (9) is provided between the oppositely lying retaining portion (8) and the corresponding support column (2).

3. Arrangement as claimed in claim 1 or 2,
**characterised in that**
the compensating wedge (9) and the corresponding retaining portion (8) of the dashboard cross member (4) are provided with guide surfaces (10, 11) for forcibly guiding the compensating wedge (9) in rotation or translation between its mounted position and its operative position.

4. Arrangement as claimed in one of the preceding claims,
**characterised in that**
in the region of points of attachment (16, 17, 18) between the support column (2) and the dashboard cross member (4), the compensating wedge (9) is provided with at least one slotted portion (15) extending along its compensating path, the width of which is smaller than a thread diameter of at least one fixing screw provided for the points of attachment (16, 17, 18) and the at least one fixing screw is of a self-threading design.

5. Arrangement as claimed in one of the preceding claims,
**characterised in that**
hook-in elements (12, 13) are provided on the compensating wedge (9) and on the co-operating retaining portion (8) of the dashboard cross member (4) which act as stops for the mounted position of the compensating wedge (9) as the compensating wedge (9) is forcibly guided in translation and the compensating wedge (9) can be displaced upwards - relative to a vehicle vertical direction - out of its mounted position relative to the retaining portion.

6. Arrangement as claimed in claim 3,
**characterised in that**
the matching inclined bearing surfaces (10) of the compensating wedge (9) and the retaining portion (8) cooperate by means of lateral guides (11) at oppositely lying peripheral regions when the compensating wedge (9) is forcibly guided in translation.

## Revendications

1. Agencement dans une zone de cockpit d'un véhicule automobile, un support transversal de cockpit (4) étant prévu, lequel peut être fixé sur des parties de retenue dans la zone de ses extrémités frontales (7, 8) opposées avec l'interposition d'au moins une cale de compensation (9) sur deux colonnes de support (1, 2) latérales d'une structure portante de carrosserie du véhicule, et auquel est associée une installation de direction sur un côté conducteur,
**caractérisé en ce que**
la cale de compensation (9) est logée au moyen d'un dispositif de support (10, 11, 12, 13) sur la partie de retenue (8) associée du support transversal de cockpit (4), dispositif de support au moyen duquel la cale de compensation (9) peut être transférée de façon forcée d'une position de montage dans une position de fonction qui compense des tolérances entre le support transversal de cockpit (4) et les colonnes de support (1, 2), et qui présente une butée (12, 13) pour la fixation de la cale de compensation (9) dans sa position de montage, et **en ce qu'**à la cale de compensation (9) sont associés des moyens de fixation (15) agissant par conjugaison de forme pour assurer en position la cale de compensation (9) dans sa position de fonction.

2. Agencement selon la revendication 1,
**caractérisé en ce que**
le support transversal de cockpit (4) est fixé dans la zone du côté conducteur directement sur la colonne support (1) associée, et **en ce que** la cale de compensation (9) est prévue entre la partie de retenue (8) opposée et la colonne de support (2) correspondante.

3. Agencement selon la revendication 1 ou 2,
**caractérisé en ce qu'**
à la cale de compensation (9) et à la partie de retenue (8) correspondante du support transversal de cockpit (4) sont associées des surfaces de guidage (10, 11) pour le guidage forcé en rotation ou translation de la cale de compensation (9) entré sa position de montage et sa position de fonction.

4. Agencement selon l'une des revendications précédentes,
**caractérisé en ce qu'**
à la cale de compensation (9) dans la zone de points de fixation (16, 17, 18) entre la colonne de support (2) et le support transversal de cockpit (4) est associée au moins une partie à trou oblong (15) s'étendant conformément à sa course de compensation, dont la largeur est inférieurs à un diamètre du filet d'au moins une vis de fixation associée (16, 17, 18), et **en ce que** l'au moins une vis de fixation est conçue auto-taraudeuse.

5. Agencement selon l'une des revendications précédentes,
**caractérisé en ce que**,
avec une cale de compensation (9) à guidage forcé en translation, il est prévu sur la cale de compensation (9) et sur la partie de retenue (8) correspondante du support transversal de cockpit (4) des éléments de suspension (12, 13) servant de buLée pour la position de montage de la cale de compensation (9), et **en ce que** la cale de compensation (9) peut être déplacée par rapport à la partie de retenue vers le haut à partir de sa position de montage, par rapport à une direction verticale du véhicule.

6. Agencement selon la revendication 3,
**caractérisé en ce que**,
avec une cale de compensation (9) à guidage forcé un translation, des guides latéraux (11) sont associés aux surfaces d'appui (10) inclinées correspondantes de la cale de compensation (9) et de la partie de retenue (8), sur des zones marginales opposées.
